# EUROPEAN PATENT APPLICATION

(11) **EP 4 769 039 A1**
(43) Date of publication of application: **01.07.2026**
(21) Application number: 23944198.3
(22) Date of filing: 20.11.2023
(51) Int. Cl.: G05B 19/04, E01H 5/04

(54) **CLEANING METHOD, CLEANING APPARATUS, SNOW-SWEEPING DEVICE, AND COMPUTER-READABLE STORAGE MEDIUM**

(30) Priority: 04.07.2023 CN 202310814561; 04.07.2023 CN 202310816245
(71) Applicant: Shenzhen Hanyang Technology Co., Ltd., Shenzhen, Guangdong 518000 (CN)
(72) Inventor: HUANG, Yang, Shenzhen, Guangdong 518000 (CN); YE, Hanwen, Shenzhen, Guangdong 518000 (CN); ZHANG, Wei, Shenzhen, Guangdong 518000 (CN)
(74) Representative: Abel & Imray LLP
(86) International application number: PCT/CN2023/132690
(87) International publication number: WO 2025/007477

(57) **Abstract**

Provided are a cleaning method, a cleaning device, a snow sweeping device and a computer-readable storage medium. The method is applied to the snow sweeping device, and includes: in a case where a standby status of the snow sweeping device is detected, determining a standby time of the snow sweeping device to obtain a first standby time; and controlling a preset module of the snow sweeping device to perform ice cube cleaning in a case where the first standby time is not less than a time threshold

## Description

### PRIORITY INFORMATION

This application claims priority to and the benefits of patent application Nos. 202310814561.4 and 202310816245.0, filed with the China National Intellectual Property Administration (CNIPA) on July 4, 2023, which are incorporated herein by reference in their entirety.

### TECHNICAL FIELD

The present application relates to the technical field of smart devices, in particular to a cleaning method, a cleaning device, a snow sweeping device and a computer-readable storage medium.

### BACKGROUND

Since an operating environment of a snow sweeping device has the characteristics of high humidity and low temperature, it is easy to cause the snow sweeping device to freeze and affect the subsequent snow sweeping work. At present, when the snow sweeping device freezes, ice cubes in the snow sweeping device are cleaned by manual cleaning.

### SUMMARY

A cleaning method provided in an embodiment of the present application is applied to a snow sweeping device, and includes: in a case where a standby status of the snow sweeping device is detected, determining a standby time of the snow sweeping device to obtain a first standby time; and controlling a preset module of the snow sweeping device to perform ice cube cleaning in a case where the first standby time is not less than a time threshold.

A cleaning method provided in another embodiment of the present application is applied to a main control module in a snow sweeping device, and includes: receiving status information from an operation module of the snow sweeping device; determining whether accumulated ice on the operation module needs to be cleaned according to the status information; and if the accumulated ice on the operation module needs to be cleaned, sending a control instruction to the operation module, the control instruction being configured for the operation module to perform accumulated ice cleaning.

A cleaning method provided in another embodiment of the present application is applied to an operation module in a snow sweeping device, and includes: sending status information of the operation module to a main control module of the snow sweeping device, the status information being configured for the main control module to determine whether accumulated ice on the operation module needs to be cleaned; receiving a control instruction from the main control module, the control instruction being a control instruction sent by the main control module in a case where it is determined that the accumulated ice on the operation module needs to be cleaned; and cleaning the accumulated ice on the operation module according to the control instruction.

A cleaning method provided in another embodiment of the present application is applied to a snow sweeping device, the snow sweeping device including an operation module, the method including: detecting status information of the operation module; determining whether accumulated ice on the operation module needs to be cleaned according to the status information; and cleaning the accumulated ice on the operation module in a case where the accumulated ice on the operation module needs to be cleaned.

A cleaning device provided in another embodiment of the present application is applied to a snow sweeping device, and includes a first determining unit, configured to determine a standby time of the snow sweeping device in a case where a standby status of the snow sweeping device is detected to obtain a first standby time; and a first control unit, configured to control a preset module of the snow sweeping device to perform ice cube cleaning in a case where the first standby time is not less than a time threshold.

A cleaning device provided in another embodiment of the present application is applied to a main control module in a snow sweeping device, and includes an acquisition unit, configured to receive status information from an operation module of the snow sweeping device; a third determining unit, configured to determine whether accumulated ice on the operation module needs to be cleaned according to the status information; and a first sending unit, configured to send a control instruction to the operation module if the accumulated ice on the operation module needs to be cleaned, the control instruction being configured for the operation module to perform accumulated ice cleaning.

A cleaning device provided in another embodiment of the present application is applied to an operation module in a snow sweeping device, and includes a second sending unit, configured to send status information of the operation module to a main control module of the snow sweeping device, the status information being configured for the main control module to determine whether accumulated ice on the operation module needs to be cleaned; a receiving unit, configured to receive a control instruction from the main control module, the control instruction being a control instruction sent by the main control module in a case where it is determined that the accumulated ice on the operation module needs to be cleaned; and a second control unit, configured to clean the accumulated ice on the operation module according to the control instruction.

A cleaning device provided in another embodiment of the present application is applied to a snow sweeping device, the snow sweeping device including an operation module, the cleaning device including a third detecting unit, configured to detect status information of the operation module; a fourth determining unit, configured to determine whether accumulated ice on the operation module needs to be cleaned according to the status information; and a cleaning unit, configured to clean the accumulated ice on the operation module if the accumulated ice on the operation module needs to be cleaned.

A snow sweeping device provided in another embodiment of the present application includes a processor and a memory, the memory storing a computer program, the processor invoking the computer program to implement the cleaning method in any one of the above embodiments.

A computer-readable storage medium provided in another embodiment of the present application stores program codes that can be invoked by a processor to implement the cleaning method in any one of the above embodiments.

### BRIEF DESCRIPTION OF THE DRAWINGS

In order to illustrate the technical solutions in the embodiments of the present application more clearly, the accompanying drawings required to be used in the description of the embodiments will be briefly introduced below. Obviously, the accompanying drawings in the following description are only some embodiments of the present application. For those skilled in the art, other drawings can be obtained according to these drawings without paying inventive step.
FIG. 1 is a schematic architecture diagram of a cleaning system according to an embodiment of the present application;
FIG. 2 is a schematic diagram of a structure of a snow sweeping device according to an embodiment of the present application;
FIG. 3 is a schematic flow diagram of a cleaning method according to an embodiment of the present application;
FIG. 4 is a schematic flow diagram of a cleaning method according to another embodiment of the present application;
FIG. 5 is a schematic flow diagram of a cleaning method according to another embodiment of the present application;
FIG. 6 is a schematic flow diagram of a cleaning method according to another embodiment of the present application;
FIG. 7 is a schematic diagram of an interaction between a main control module and an operation module according to an embodiment of the present application;
FIG. 8 is a schematic flow diagram of a cleaning method according to another embodiment of the present application;
FIG. 9 is a schematic modular diagram of a cleaning device according to an embodiment of the present application;
FIG. 10 is a schematic modular diagram of a cleaning device according to another embodiment of the present application;
FIG. 11 is a schematic modular diagram of a cleaning device according to another embodiment of the present application;
FIG. 12 is a schematic modular diagram of a cleaning device according to another embodiment of the present application;
FIG. 13 is a schematic modular diagram of a snow sweeping device according to an embodiment of the present application; and
FIG. 14 is a schematic modular diagram of a computer-readable storage medium according to an embodiment of the present application.

### DETAILED DESCRIPTION

Embodiments of the present application are described in detail below, examples of which are shown in the accompanying drawings, wherein the same or similar reference numerals throughout denote the same or similar elements or elements having the same or similar function. The embodiments described below with reference to the accompanying drawings are exemplary and are intended only to explain the present application, and are not to be construed as limiting the present application.

In order to make those skilled in the technical field better understand the solutions of the present application, the technical solutions in the embodiments of the present application will be clearly and completely described below with reference to the accompanying drawings in the embodiments of the present application. Obviously, the described embodiments are only some but not all of the embodiments of the present application. Based on the embodiments in the present application, all other embodiments obtained by those skilled in the art without making inventive step belong to the scope of protection of the present application.

Since the environment in which a snow sweeping device (such as a snow sweeping robot, a snow sweeping truck, a snow sweeping brush, etc.) operates has the characteristics of low temperature and high humidity, it is easy to cause the snow sweeping device to freeze and affect the subsequent snow sweeping work. For example, some modules of the snow sweeping device are liable to show a freezing phenomenon during intermittent operation, so that the snow sweeping device cannot perform a snow sweeping operation. For example, the snow sweeping device can include a moving module, if the moving module freezes, the snow sweeping device cannot move according to a preset path when the snow sweeping device is turned on again, and the snow sweeping operation cannot be performed. For example, snow remaining on blades of the snow sweeping device easily accumulates and freezes, resulting in low working efficiency of the snow sweeping device.

In some embodiments, in a case where a standby status of the snow sweeping device is detected, a standby time of the snow sweeping device is determined to obtain a first standby time; and a preset module of the snow sweeping device is controlled to perform ice cube cleaning in a case where the first standby time is not less than a time threshold. By detecting the continuous standby time of the snow sweeping device during standby, when the standby time is equal to or greater than the time threshold, the preset module of the snow sweeping device is automatically controlled to perform ice cube cleaning. Hereby, the operation convenience of the snow sweeping device and the working efficiency of the snow sweeping device for subsequent snow sweeping operations are improved by automatically cleaning ice cubes of the snow sweeping device.

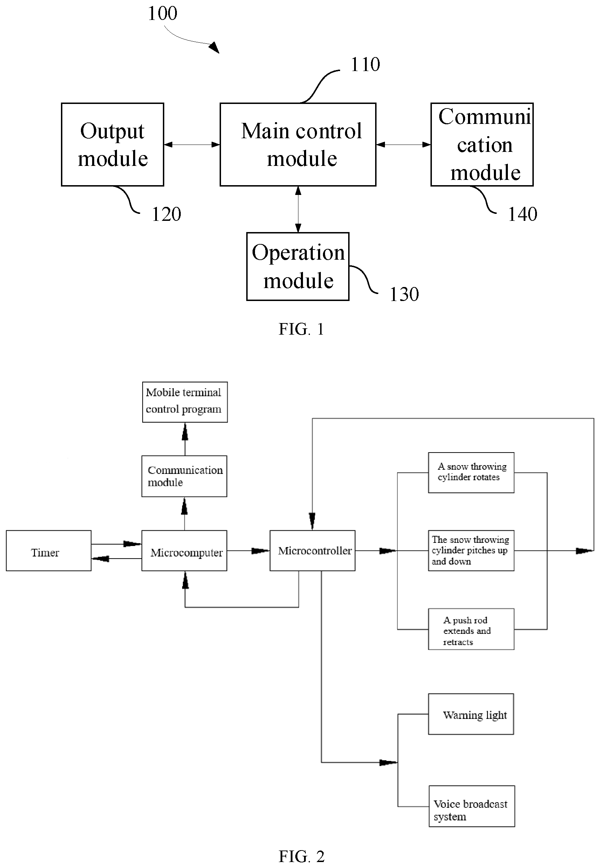

In order to better understand the embodiments of the present application, a system architecture diagram is first described below. Referring to FIG. 1, FIG. 1 is a schematic architecture diagram of a cleaning system 100 of a snow sweeping device according to an embodiment of the present application. As shown in FIG. 1, the cleaning system 100 may include a main control module 110, an output module 120, an operation module 130, and a communication module 140. The main control module 110 may be configured to control the output module 120, the operation module 130, the communication module 140, and the like.

The output module 120 may include a prompt device that may output prompt information that is controlled to be output by the operation module 130. Specifically, the prompt device is configured to display prompt information prompting a user that the snow sweeping device is performing cleaning or the snow sweeping device cannot perform cleaning. The prompt device can also be configured to display information such as a power-on status, a power-off status, an operating status, a standby status and a power quantity of the snow sweeping device. The operation module 130 can include a container device and a moving module, and the container device and the moving module can be configured to execute an execution instruction issued by the main control module 110. In particular, the container device and the moving module can execute a working instruction and a cleaning instruction. The communication module 140 may be configured to synchronize data in the main control module 110 to a terminal and receive a control instruction from the terminal, and the main control module 110 can control the output module 120, the operation module 130 and the communication module 140 according to the control instruction.

As an embodiment, at a usage interval of the snow sweeping device, the standby status of the snow sweeping device is detected by the main control module 110, and the operation module 130 is controlled in a case where the standby time of the snow sweeping device reaches a preset threshold. The output module 120 is controlled to prompt a user that ice cube cleaning is being performed when the operation module 130 performs ice cube cleaning. Information of ice cube cleaning by the snow sweeping device is synchronized to the terminal through the communication module 140.

The architecture of the cleaning system 100 of the snow sweeping device shown in FIG. 1 is only one example, and does not constitute a limitation to the technical solutions provided in the embodiments of the present application. With the evolution of the architecture of the cleaning system of the snow sweeping device and the emergence of new application scenarios, the technical solutions provided in the embodiments of the present application are equally applicable to similar technical problems.

Referring to FIG. 2, FIG. 2 is a schematic structural diagram of a snow sweeping device. The snow sweeping device includes a main control module (such as a microcomputer and a microcontroller), a timer, an operation module (such as a snow throwing cylinder and a push rod), a prompt device (such as a warning light and a voice broadcast system), a communication module, and a mobile terminal control program connected with the communication module. Both the cleaning system 100 in the embodiment of FIG. 1 and the snow sweeping device in the embodiment of FIG. 2 can implement any one of the steps of a cleaning method in any one of the embodiments described below.

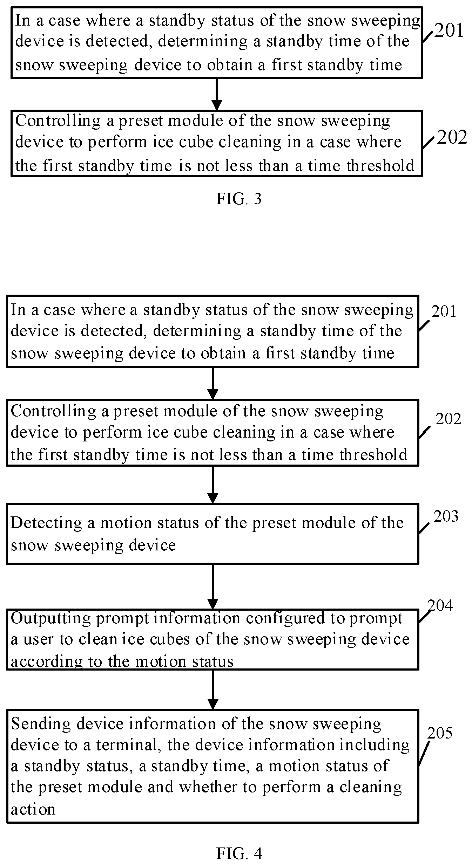

Referring to FIG. 3, FIG. 3 is a schematic flow diagram of a cleaning method according to an embodiment of the present application. The cleaning method can be applied to a snow sweeping device, and the snow sweeping device can be a device for sweeping snow, such as a snow sweeping robot, a snow sweeping truck, a snow sweeping brush or the like. The cleaning method may include the following steps.

201, In a case where a standby status of the snow sweeping device is detected, a standby time of the snow sweeping device is determined to obtain a first standby time.

After the snow sweeping device has executed a start instruction, the snow sweeping device can include an operating status and a standby status. The operating status of the snow sweeping device refers to an operating status that the snow sweeping device performs snow sweeping operations through respective preset modules. In this operating status, each preset module is moving without freezing. The standby status of the snow sweeping device refers to a non-operating status in which the preset modules of the snow sweeping device do not perform snow sweeping operations in a low-temperature and high-humidity environment after the snow sweeping device is turned on. In this non-operating status, each preset module of the snow sweeping device is in a stationary status and prone to icing, resulting in that it is difficult for the snow sweeping device to enter the operating status from the non-operating status. The preset module may be an operation module.

The snow sweeping device may include a detection device. The detection device can be configured to detect a motion status of the preset module of the snow sweeping device. The motion status of the preset module can characterize whether the snow sweeping device is in an operating status, and can also characterize whether the snow sweeping device performs an action of ice cube cleaning. When the motion status of the preset module is configured to characterize whether the snow sweeping device performs the action of ice cube cleaning, the detection device can be configured to determine whether the preset module is in a cleaning status or is in a state of having completed the cleaning operation. When the motion status of the preset module is configured to characterize whether the snow sweeping device performs the action of ice cube cleaning, for a specific process that the detection device can determine whether the preset module is in the cleaning status or is in a state of having completed the cleaning operation, please continue to refer to the following steps.

When the motion status of the preset module is configured to characterize whether the snow sweeping device is in the operating status, the detection device can be configured to confirm whether the snow sweeping device is in the operating status. The standby status of the snow sweeping device can be determined by detecting whether each preset module of the snow sweeping device is monitored as being in the standby status. Specifically, if a power supply of the snow sweeping device is detected to be turned on by a first detection device, but the operation module performing the snow sweeping operation is not driven, then the snow sweeping device is in the standby status.

The snow sweeping device may further include a timing device. The timing device may be a count-up timer, and the standby time of the snow sweeping device in the non-operating status is calculated by the count-up timer. The standby time can be an intermittent time period during which the snow sweeping device performs the snow sweeping operation, and can also be a time period of the non-operating status during which the snow sweeping device does not start performing the snow sweeping operation after the snow sweeping device is connected to the power source. Specifically, the count-up timer can calculate a difference value between the time when the first detection device detects the standby status of the snow sweeping device for the first time and the time when the first detection device detects the operating status of the snow sweeping device for the first time to obtain the standby time of the snow sweeping device in the standby status. The standby time of the snow sweeping device in the standby status can also be obtained by calculating a difference value between the time when the first detection device detects that the power supply of the snow sweeping device is turned on and the time when the first detection device detects the operating status of the snow sweeping device for the first time.

In some embodiments, the timing device may also be a count-down timer. The count-down timer may include a time length set by a user or may include a time length customized by a manufacturer. The count-down timer is turned on when the power supply of the snow sweeping device is turned on but the snow sweeping device does not enter the operating status or the snow sweeping device switches from the operating status to the non-operating standby status. The count-down timer counts down until the count-down timer reaches zero. If it is determined that icing has occurred or is likely to occur in the preset module of the snow sweeping device, the preset module of the snow sweeping device is controlled to perform ice cube cleaning.

202, In a case where the first standby time is not less than a time threshold, the preset module of the snow sweeping device is controlled to perform ice cube cleaning.

When the first standby time of the snow sweeping device is equal to the time threshold, the preset module of the snow sweeping device is automatically controlled to perform ice cube cleaning. The preset module of the snow sweeping device is automatically controlled to perform ice cube cleaning when the first standby time of the snow sweeping device is greater than the time threshold.

The time threshold can be set in advance in the snow sweeping device. The time threshold may be a time length that the preset module of the snow sweeping device is ensured not to freeze under a preset temperature and humidity environment. The time threshold may be a time length customized by a user, or may be preset by a manufacturer of the snow sweeping device according to the icing time. Under a preset temperature and humidity environment, if the time threshold is exceeded, ice cubes may not be automatically cleaned, thereby affecting the efficiency of the snow sweeping device for the snow sweeping operation.

The snow sweeping device may further include an operation module 130. The operation module 130 may include a sweeping module and a moving module, that is, the preset module may include the sweeping module and the moving module. The operation module 130 can be configured to perform a snow sweeping operation according to an instruction issued by a main control module 110. The sweeping module can be configured to drive snow on the ground to roll simultaneously with a force of a drum, so as to realize the snow sweeping function. The moving module can be configured to drive the snow sweeping device to move forward, so that the snow sweeping device achieves the snow sweeping function according to a preset motion path.

The operation module 130 can also be configured to perform cleaning according to an instruction issued by the main control module 110. For example, controlling the preset module to perform ice cube cleaning includes controlling the sweeping module to rotate and/or pitch; and/or controlling the moving module to extend and retract. The sweeping module can rotate a snow throwing cylinder to clear ice cubes inside the snow throwing cylinder by a force of rotation and/or pitch the snow throwing cylinder to clear the ice cubes inside the snow throwing cylinder by a force of pitch when performing the cleaning action. The moving module can extend and retract a push rod to clear ice cubes on the moving module by a telescopic force of the push rod when performing the cleaning action.

Automatically controlling the preset module of the snow sweeping device to perform ice cube cleaning improves the operating convenience of the snow sweeping device and the working efficiency of the snow sweeping device for subsequent snow sweeping operations.

Referring to FIG. 4, FIG. 4 is a schematic flow diagram of a cleaning method according to another embodiment of the present application. The cleaning method may include the following steps.

201, In a case where a standby status of a snow sweeping device is detected, a standby time of the snow sweeping device is determined to obtain a first standby time.

202, In a case where the first standby time is not less than a time threshold, a preset module of the snow sweeping device is controlled to perform ice cube cleaning.

203, A motion status of the preset module of the snow sweeping device is detected.

The snow sweeping device includes a detection device. The detection device can be configured to detect the motion status of the preset module of the snow sweeping device. The motion status of the preset module can characterize whether the snow sweeping device is in an operating status, and can also characterize whether the snow sweeping device performs an action of ice cube cleaning.

When the motion status of the preset module is configured to characterize whether the snow sweeping device performs the action of ice cube cleaning, the detection device can be configured to determine whether the preset module is in a cleaning status or is in a state of having completed the cleaning operation. Whether the snow sweeping device is in the cleaning status can be determined by detecting whether the preset module of the snow sweeping device is driven. Specifically, whether the preset module of the snow sweeping device is driven is detected by a first detection device, in a case where it is detected that the preset module is in a driven status, it is determined that the preset module of the snow sweeping device is in the cleaning status, and is performing a cleaning action. Whether the snow sweeping device is in a status of completing the cleaning operation can also be determined by detecting a difference value between the time when the preset module of the snow sweeping device is driven and the time when the preset module of the snow sweeping device is not driven. In a case where the preset module of the snow sweeping device is in the cleaning status or the status of completing the cleaning operation, the snow sweeping device does not need to perform ice cube cleaning.

Correspondingly, in a case where the preset module of the snow sweeping device is not in the cleaning status and is not in the status of completing the cleaning operation, the snow sweeping device does not need to perform ice cube cleaning. Namely, in a case where the preset module of the snow sweeping device is not in the motion status and a preset condition is met, the preset module of the snow sweeping device is subjected to ice cube cleaning. The preset condition may be that the preset module of the snow sweeping device is not in the motion status and the time threshold is reached.

204, Prompt information configured to prompt a user to clean ice cubes of the snow sweeping device is output according to the motion status.

The snow sweeping device further includes a prompt device. The prompt device is configured to output prompt information for prompting a user that the snow sweeping device is performing ice-cube cleaning.. Specifically, in a case where the preset module of the snow sweeping device is in a first status, it indicates that the preset module of the snow sweeping device is performing the action of ice cube cleaning, and prompt information can be output by the prompt device to prompt the user that the preset module of the snow sweeping device is performing ice cube cleaning. In a case where the preset module of the snow sweeping device is in a second status, it indicates that the preset module of the snow sweeping device cannot perform the action of ice cube cleaning in a case where the action of ice cube cleaning needs to be performed, and prompt information can be output/displayed by the prompt device to prompt the user that the snow sweeping device cannot perform ice-cube cleaning..

The prompt device may include a warning light and may also include a voice broadcast system. The warning light can prompt the user by flashing light, and can also indicate the operating status or the moving status of the snow sweeping device by setting the light to be constantly on, and indicate the standby status of the snow sweeping device by setting the light to be constantly off. The voice broadcast system can prompt the user by broadcasting the operating status of the snow sweeping device.

Exemplarily, when the snow sweeping device is in the standby status, the user can be prompted that a current status of the snow sweeping device is the motion status (the first status) in which the preset module of the snow sweeping device is performing the action of ice cube cleaning by setting the warning light to be constantly on; and the user can also be prompted that the preset module of the snow sweeping device is in a non-motion status (the second status) in which the action of ice cube cleaning cannot be performed in a case where the action of ice cube cleaning needs to be performed by flashing the warning light. Meanwhile, the voice broadcast system can also broadcast that the snow sweeping device is performing "automatic ice breaking", or the voice broadcast system may emit a beep to alert the user that the snow sweeping device cannot perform the action of ice cube cleaning.

In some embodiments, the cleaning method may include the following steps.

201, In a case where a standby status of the snow sweeping device is detected, a standby time of the snow sweeping device is determined to obtain a first standby time.

202, In a case where the first standby time is not less than a time threshold, a preset module of the snow sweeping device is controlled to perform ice cube cleaning.

203, A motion status of the preset module of the snow sweeping device is detected. 204, Prompt information configured to prompt a user to clean ice cubes of the snow sweeping device is output according to the motion status.

205, Device information of the snow sweeping device is sent to a terminal, the device information including a standby status, a standby time, a motion status of the preset module and whether to perform a cleaning action.

The snow sweeping device can also be connected with the terminal. The terminal can be configured to achieve convenient interaction between the snow sweeping device and the user. The use convenience of the snow sweeping device by the user is promoted by synchronizing the device information of the snow sweeping device to the terminal. The device information of the snow sweeping device can be a standby status of the snow sweeping device and a duration (standby time) during which the snow sweeping device continues to be in the standby status, can also be the motion status of the preset module of the snow sweeping device (the motion status can characterize whether the snow sweeping device is sweeping snow, and can also characterize whether the snow sweeping device is cleaning ice cubes), and can also be whether the preset module of the snow sweeping device can completely perform the cleaning action.

In a process that the preset module of the snow sweeping device performs ice cube cleaning, the motion status of the snow sweeping device is switched to the non-motion status under the condition that the ice cube cleaning is not completed due to the reasons that the power quantity is insufficient, the ice cube is stuck and so on. Therefore, a real-time status of the snow sweeping device can be synchronized to the terminal to prompt the user of the real-time status of the snow sweeping device and a real-time status of the preset module of the snow sweeping device.

In another embodiment, the cleaning method may further include: receiving a control instruction from the terminal; and controlling the snow sweeping device according to the control instruction.

In a case where the user obtains the real-time status of the snow sweeping device and the real-time status of the preset module of the snow sweeping device through the terminal, the user can adjust the current status of the snow sweeping device through the terminal, improving the user's experience in using the snow sweeping device.

In the embodiment of the cleaning method described in FIG. 4, in a case where the standby status of the snow sweeping device is detected, a standby time of the snow sweeping device is determined to obtain a first standby time; and the preset module of the snow sweeping device is controlled to perform ice cube cleaning in the case where the first standby time is not less than the time threshold. By detecting the continuous standby time of the snow sweeping device during standby, when the standby time is equal to or greater than the time threshold, the preset module of the snow sweeping device is automatically controlled to perform ice cube cleaning. Hereby, the operation convenience of the snow sweeping device and the working efficiency of the snow sweeping device for subsequent snow sweeping operations are improved by automatically cleaning ice cubes of the snow sweeping device. In addition, in a case where the snow sweeping device performs ice cube cleaning or cannot perform ice cube cleaning, prompt information can be output, so that the user can perform processing according to the prompt information. Further, by synchronizing the device information of the snow sweeping device to the terminal, the user can control the snow sweeping device according to the device information through the terminal, improving the user experience.

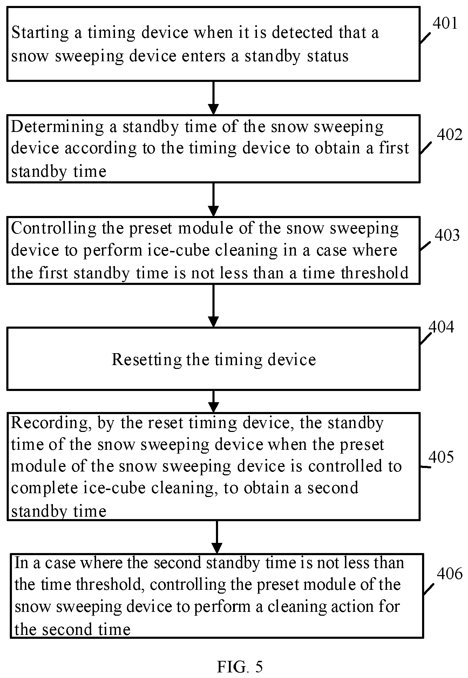

Referring to FIG. 5, FIG. 5 is a schematic flow diagram of a cleaning method according to another embodiment of the present application. The cleaning method may include the following steps.

401, When it is detected that a snow sweeping device enters a standby status, a timing device is started.

402, A standby time of the snow sweeping device is determined according to the timing device to obtain a first standby time.

The snow sweeping device acquires a status of the snow sweeping device through a detection device. When the status of the snow sweeping device is detected to be the standby status by the detection device, the timing device is started, and the timing device is configured to perform count-up timing.

A specific implementation process of Steps 401 and 402 can refer to the description of Step 201 in the embodiment corresponding to FIG. 3 or FIG. 4, which will not be further described here.

In some embodiments, the cleaning method may include the following steps.

403, In a case where the first standby time is not less than a time threshold, the snow sweeping device is controlled to perform ice cube cleaning.

A specific implementation process of Step 403 can refer to the description of Step 202 in the embodiment corresponding to FIG. 3 or FIG. 4, which will not be further described here.

In some embodiments, an icing situation in a preset module of the snow sweeping device can also be detected, and it is determined whether to control the preset module to perform ice cube cleaning according to the icing situation of the preset module. In a case where it is detected that the first standby time of the snow sweeping device is not less than the time threshold, a second detection device on the preset module of the snow sweeping device can be triggered. The second detection device can be configured to detect the icing situation in the preset module of the snow sweeping device. The second detection device may be a weight sensor installed in the preset module and may also be a current sensor installed in the preset module.

Exemplarily, a weight signal in the preset module may be acquired by the weight sensor, and the icing situation in the preset module is determined according to the weight signal. A current signal in the preset module may also be acquired by the current sensor, and the icing situation in the preset module is determined according to the current signal.

In some embodiments, after the icing situation of the preset module is determined, the preset module is controlled to perform ice cube cleaning. In particular, the icing situation of the preset module includes non-icing and icing. The situation of non-icing indicates that no ice is formed in the preset module of the snow sweeping device when the standby time of the snow sweeping device in the standby status reaches the time threshold, and the uniced preset module does not affect the subsequent snow sweeping operation of the snow sweeping device. In this case, there is no need to control the preset module to perform ice cube cleaning. In the case of no icing, the action of cleaning ice cubes is reduced, and electric resources are saved during the snow sweeping operation of the snow sweeping device.

In a case where the icing situation of the preset module is icing, it indicates that the standby time of the snow sweeping device in the standby status has reached the time threshold, the preset module of the snow sweeping device is iced, and the subsequent snow sweeping operation cannot be performed, affecting the use convenience of the snow sweeping device and the working efficiency of the snow sweeping operation. In this case, the preset module of the snow sweeping device is controlled to perform an action of ice cube cleaning. When an icing situation in a sweeping module is icing, the sweeping module in the preset module is controlled to rotate and/or pitch; and when an icing situation of a moving module is icing, the moving module in the preset module is controlled to extend and retract.

In some embodiments, the cleaning method may include the following steps.

401, When it is detected that a snow sweeping device enters a standby status, a timing device is started.

402, A standby time of the snow sweeping device is determined according to the timing device to obtain a first standby time.

403, In a case where the first standby time is not less than a time threshold, the snow sweeping device is controlled to perform ice cube cleaning.

404, The timing device is reset.

The snow sweeping device is controlled to perform ice cube cleaning when the standby time of the snow sweeping device in the standby status acquired by the timing device is not less than the time threshold. At the same time, a timing number of the timing device is cleared. When the detection device acquires the standby status of the snow sweeping device, the timing device is turned on again.

In another embodiment, in a case where the standby time of the snow sweeping device in the standby status has reached the time threshold, but the preset module of the snow sweeping device is not iced, the timing number of the timing device is cleared. When the detection device acquires the standby status of the snow sweeping device, the timing device is turned on again. In a case where the standby time of the snow sweeping device acquired by the timing device is not less than the time threshold, the icing situation in the preset module of the snow sweeping device is detected.

405, When the preset module of the snow sweeping device is controlled to complete ice cube cleaning, the standby time of the snow sweeping device is recorded by the reset timing device to obtain a second standby time.

After the preset module of the snow sweeping device finishes the action of performing ice cube cleaning, the snow sweeping device can also be in the standby status. Therefore, the standby status of the snow sweeping device can be detected for the second time by the detection device, and the standby time of the snow sweeping device can also be calculated for the second time by the timing device to obtain the second standby time.

406, In a case where the second standby time is not less than the time threshold, the preset module of the snow sweeping device is controlled to perform a cleaning action for the second time.

When the second standby time is equal to or greater than the time threshold, in the environment of the same humidity and temperature, the second standby time, like the first standby time, is also deemed to indicate that icing may occur in the preset module of the snow sweeping device in the standby status. Therefore, by controlling the preset module of the snow sweeping device to perform the cleaning action for the second time, the cleaning of ice cubes in the preset module of the snow sweeping device can be realized.

In some embodiments, in a case where the second standby time is not less than the time threshold, an icing situation in the preset module of the snow sweeping device after the second standby time can also be detected. If the preset module of the snow sweeping device is not iced, there is no need to perform the action of ice cube cleaning.

In the embodiment of the cleaning method described in FIG. 5, in a case where the standby status of the snow sweeping device is detected, a standby time of the snow sweeping device is determined to obtain a first standby time; and the preset module of the snow sweeping device is controlled to perform ice cube cleaning in the case where the first standby time is not less than the time threshold. By detecting the continuous standby time of the snow sweeping device during standby, when the standby time is equal to or greater than the time threshold, the preset module of the snow sweeping device is automatically controlled to perform ice cube cleaning. Hereby, the operation convenience of the snow sweeping device and the working efficiency of the snow sweeping device for subsequent snow sweeping operations are improved by automatically cleaning ice cubes of the snow sweeping device. In addition, it can be determined whether to perform the action of ice cube cleaning to save resources by detecting the icing situation of the preset module of the snow sweeping device. Further, in a case where the snow sweeping device is continuously in the standby status, secondary detection of the standby status of the snow sweeping device can be continuously performed, and ice cube cleaning is performed as soon as the standby time of the snow sweeping device reaches a preset time, improving the convenience of use of the device after the snow sweeping device is continuously in the standby status.

It can be understood that the same or corresponding information in the different embodiments described above may be referred to each other.

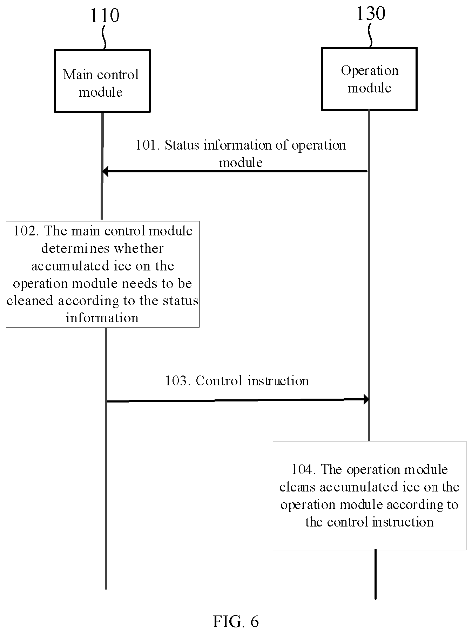

Referring to FIG. 6, which is a schematic flow diagram of a cleaning method according to another embodiment of the present application, taking a main control module 110 and an operation module 130 which are mounted on a snow sweeping device as an example, when a program corresponding to the cleaning method is executed, a specific flow of the cleaning method is as follows:
101, an operation module sends status information of the operation module of the snow sweeping device to a main control module.

Correspondingly, the main control module 110 receives status information from the operation module 130 of the snow sweeping device.

The snow sweeping device may refer to a dedicated mechanical device for clearing snow accumulated on the snow ground or an ice surface. The snow sweeping device generally includes a main control module 110 and an operation module 130, wherein the main control module 110 is configured to receive status information of the operation module 130 and send a cleaning instruction, and the operation module 130 is configured to clean accumulated snow. The snow sweeping device can be applied to places where accumulated snow needs to be cleared, such as roads, sidewalks, and parking lots.

The status information may refer to operating status information of the snow sweeping device, and may include: current information, location information, motor temperature information, operating speed information, noise information, and the like. Such status information may allow the main control module 110 to better monitor the status of the operation module 130.

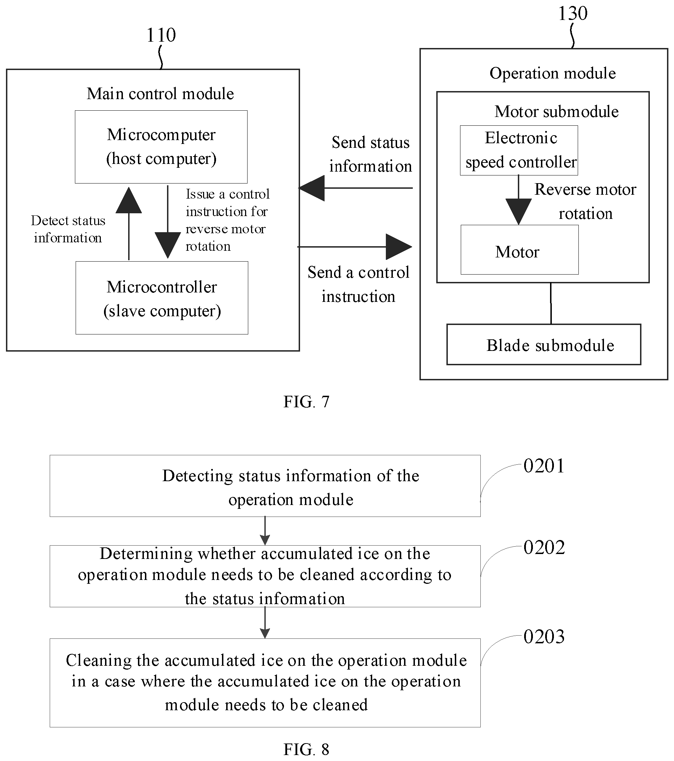

The operation module 130 and the main control module 110 may be connected via a connection port or wireless communication or a communication module 140 or other means. During the operation of the snow sweeping device, the operation module 130 continuously detects a current operating status, including a current position, the snow sweeping effect and the remaining power quantity, etc. The operation module 130 can encode the collected status information, and can send the encoded information to the main control module 110 of the snow sweeping device through wireless communication. The main control module 110 of the snow sweeping device receives the status information and decodes the status information to obtain specific information. As shown in FIG. 7, the operation module 130 continuously detects and sends current status information to the main control module 110 so that the main control module 110 can learn about the latest status of the operation module 130.

As shown in FIG. 7, the main control module 110 may include a microcomputer (a host computer) and a microcontroller (a slave computer), and the microcontroller may receive status information from the operation module 130 and detect the status information through the microcomputer. Such status information may be obtained by the operation module 130 using sensors or monitoring devices. These sensors may include a temperature sensor, a humidity sensor, a current sensor, and the like for obtaining various status information of the operation module 130. Illustratively, the temperature sensor may be configured to monitor the temperature of the operation module 130 in real time to determine whether ice cubes are accumulated. The humidity sensor may detect the humidity surrounding the operation module 130 to determine if there is a possibility of icing. The current sensor may monitor an operating current value of the operation module 130 to understand its load condition. The acquired status information can also be transmitted to the main control module 110 by connecting the above sensors with the main control module 110 of the snow sweeping device. The main control module 110 may receive the status information in a wired or wireless manner, for example, using a data line or a wireless communication technology such as Bluetooth. Finally, the status information of the operation module 130 is received by the main control module 110 and may be subsequently analyzed and processed.

By the above manner, the operation module 130 can send the status information of the operation module 130 to the main control module 110 of the snow sweeping device, so that the main control module 110 can know the status information of the operation module 130 at any time. The main control module 110 can accurately know the situation of the operation module 130 in real time by receiving the status information from the operation module 130 of the snow sweeping device, thereby taking cleaning measures in time, ensuring the working efficiency and safety of the snow sweeping device.

102, The main control module determines whether accumulated ice on the operation module needs to be cleaned according to the status information.

When the operation module 130 of the snow sweeping device is in an operating status, the main control module 110 monitors the status information of the operation module 130 in real time. The main control module 110 determines whether the operation module 130 needs to clean accumulated ice based on the status information. Based on temperature information of the operation module 130, it may be determined whether the motor temperature of the operation module 130 is too high, and if the temperature is too low, it indicates that there may be accumulated ice. It can also be determined whether there is a possibility of icing through humidity information of the operation module 130. In conclusion, it can be determined whether accumulated ice on the operation module 130 needs to be cleaned according to the status information, thereby effectively helping the snow sweeping device to automatically determine whether accumulated ice needs to be cleaned, improving the working efficiency and convenience.

In some embodiments, the status information includes at least current information and location information, and the main control module 110 may determine whether accumulated ice on the operation module 130 needs to be cleaned according to an operating current value and an operating distance of the operation module 130. For example, the Step 102 that "it is determined whether the accumulated ice on the operation module needs to be cleaned according to the status information" may include:
(102.1) determining the operating current value of the operation module according to the current information;
(102.2) determining the operating distance of the operation module according to the location information;
(102.3) determining whether the operating current value is greater than a first threshold value, and/or whether the operating distance is greater than a second threshold value; and
(102.4) determining that the accumulated ice on the operation module needs to be cleaned in a case where the operating current value is greater than the first threshold value, and/or the operating distance is greater than the second threshold value.

The operating current value may be a current value that passes through the snow sweeping device in a normal operating status of the snow sweeping device. The operating current is a current generated in a circuit by the snow sweeping device under normal load conditions. The operating current is critical to the performance and safety of the snow sweeping device, and an excessively high or excessively low operating current may cause the snow sweeping device to malfunction or be damaged.

The operating distance can be a distance at which the snow sweeping device continuously operates and clears snow in an operating status. After the snow sweeping device operates for a certain distance, snow and ice tend to accumulate on a blade portion, easily causing a motor to stall, affecting the working efficiency.

When the operation module 130 of the snow sweeping device is in the operating status, the main control module 110 monitors the status information of the operation module 130 in real time, the status information including current information and location information. The main control module 110 may determine whether the operation module 130 needs to clean accumulated ice according to the current information and the location information. First, the main control module 110 determines the operating current value of the operation module 130 based on the current information. If the operating current value is greater than the set first threshold value, it indicates that there may be accumulated ice on the operation module 130 and the accumulated ice needs to be cleaned. In this case, the main control module 110 sends a control instruction to the operation module 130, and the content of the control instruction is to allow the operation module 130 to perform accumulated ice cleaning. Secondly, the main control module 110 determines the operating distance of the operation module 130 based on the location information. If the operating distance is greater than the set second threshold value, it also indicates that there may be accumulated ice on the operation module 130 to be cleaned. In this case, the main control module 110 also sends a control instruction to the operation module 130, and the content of the control instruction is to clean accumulated ice. In summary, the process of determining whether the accumulated ice on the operation module 130 needs to be cleaned according to the status information may be implemented by determining whether the operating current value and the operating distance exceed the set threshold values. Not only is the snow sweeping device effectively helped to automatically determine whether the accumulated ice needs to be cleaned, but also the working efficiency and convenience are improved.

By the above manner, it can be determined through the status information whether the accumulated ice on the operation module 130 needs to be cleaned, so that cleaning measures are taken in time, ensuring the working efficiency and safety of the snow sweeping device.

103, The main control module sends a control instruction to the operation module in a case where the accumulated ice on the operation module needs to be cleaned.

Accordingly, the operation module 130 receives the control instruction from the main control module 110.

The control instruction may be a computer instruction to perform accumulated ice cleaning sent by the main control module 110 to the operation module 130.

The main control module 110 determines whether accumulated ice on the operation module 130 needs to be cleaned by setting some thresholds, such as a current value, a temperature value, and the like. When the status information exceeds or falls below these thresholds, it is determined that accumulated ice on the operation module 130 needs to be cleaned, and an accumulated ice cleaning operation of the operation module 130 may be started by sending the control instruction to the operation module 130. As shown in FIG. 7, the microcomputer in the main control module 110 sends a control instruction to the microcontroller after detecting the status information. Accordingly, the operation module 130 may receive a control instruction from the main control module 110, and the control instruction may be a control instruction sent by the main control module 110 in a case where it is determined that there is accumulated ice on the operation module 130. A process of determining whether there is accumulated ice on the operation module 130 may refer to Step 102.

By the above manner, when accumulated ice on the operation module 130 needs to be cleaned, the control instruction may be sent to the operation module 130 by the main control module 110 so that the operation module 130 operates to clean accumulated ice on blades. Correspondingly, the operation module 130 can start the accumulated ice cleaning operation of the operation module 130 by receiving a control instruction from the main control module 110, ensuring safe and normal operation of the snow sweeping device, and improving the working efficiency of the snow sweeping device.

104, The operation module cleans accumulated ice on the operation module according to the control instruction.

After the operation module 130 receives the control instruction sent by the main control module 110, the operation module 130 starts cleaning the accumulated ice. First, the operation module 130 can detect the thickness and distribution of accumulated ice through sensors and feed such information back to the main control module 110. Based on the information provided by the sensors and a preset cleaning strategy, the main control module 110 determines specific cleaning measures that need to be taken. Next, the operation module 130 may start the corresponding cleaning device according to the specific cleaning measures to treat an ice accumulation area. Taking a water spray device or a heating device as an example, if the water spray device is selected, the operation module 130 sprays a heated liquid or a high-pressure water flow to instantly melt or break through the accumulated ice. If the heating device is selected, the operation module 130 heats the ice accumulation area to melt the accumulated ice. During the cleaning process, the operation module 130 makes adjustments according to parameters in the control instruction to ensure that the cleaning effect meets the requirements. After the cleaning is completed, the operation module 130 sends status information to the main control module 110 again to report the cleaning result.

In some embodiments, as shown in FIG. 7, the operation module 130 includes a motor submodule and a blade submodule, and the operation module 130 may control the motor submodule to clean the accumulated ice according to the control instruction. For example, Step 0203 of "cleaning accumulated ice on the operation module 130 according to the control instruction" may include:
controlling the motor submodule to perform reverse rotation according to the control instruction, so that the blade submodule throws off accumulated ice on the blades.

After receiving the control instruction, the operation module 130 performs a cleaning operation according to the instruction. After receiving the control instruction, the operation module 130 controls the operation of the motor submodule according to the content of the instruction. The control instruction may instruct the motor submodule to rotate reversely, i.e., to rotate the blade submodule reversely. This way of operation enables the blade submodule to throw away the accumulated ice on the blades. Rotating blades of the blade submodule have a certain inertia during reverse rotation, and by the reverse rotation, the accumulated ice is thrown away under the action of a centrifugal force. In this way, after the accumulated ice is detached from the blades, the snow sweeping device can continue to operate normally without being hindered by the accumulated ice. As shown in FIG. 7, the motor submodule includes an electronic speed controller and a motor, and the electronic speed controller controls the motor to perform reverse motor rotation after receiving the control instruction, thereby driving the blade submodule to rotate reversely. To ensure the cleaning effect, the motor submodule can be provided with a certain reverse rotation power to ensure a sufficient centrifugal force to throw the accumulated ice away from the blades. In implementation, the reverse rotation power of the reverse rotation of the motor submodule can be adjusted according to the specific situation to achieve the best cleaning effect. Thus, the sufficient centrifugal force can be generated by reverse rotation of the motor submodule to throw the accumulated ice away from the blades, ensuring the normal operation of the snow sweeping device.

By the above manner, the accumulated ice on the operation module 130 can be cleaned by the control instruction, thereby effectively improving the operation efficiency and safety of the snow sweeping device, and ensuring the normal operation of the snow sweeping device.

In an embodiment of the present application, the cleaning method may further include Step A which may include:
(A.1) monitoring the time of the reverse rotation of the motor submodule; and
(A.2) controlling the motor submodule to stop the reverse rotation in a case where the time of the reverse rotation of the motor submodule is greater than a third threshold value.

To ensure the cleaning effect of the operation module 130, a certain operating duration may be set to ensure a sufficient time for accumulated ice to be thrown away from the blade submodule. In implementation, the motor submodule may be maintained in a reverse rotation status within a certain period of time to achieve blade cleaning based on monitoring the time of the reverse rotation of the motor submodule. At the same time, a reverse rotation time (the third threshold value) is set for the motor submodule to ensure that the operation module 130 can continue to operate after the accumulated ice is cleaned. The motor submodule is controlled to stop the reverse rotation, and the snow sweeping operation is continued to be performed in the case where the time of the reverse rotation of the motor submodule is greater than the third threshold value. Hereby, the optimal cleaning effect can be achieved, and the working efficiency of the snow sweeping device is ensured.

By the above manner, the operation of the motor submodule can be controlled by monitoring the time of the reverse rotation of the motor submodule, ensuring the normal operation of the snow sweeping device.

By implementing any one or a combination of embodiments of the present application, an application scenario of the blade cleaning process can be achieved.

The operation module 130 may send status information of the operation module 130 of the snow sweeping device to the main control module 110; the main control module 110 determines whether accumulated ice on the operation module 130 needs to be cleaned according to the status information; if the accumulated ice on the operation module 130 needs to be cleaned, the main control module 110 sends a control instruction to the operation module 130; and the operation module 130 cleans the accumulated ice on the operation module 130 according to the control instruction.

As can be seen from the above, in the embodiments of the present application, the operation module 130 sends the status information of the operation module 130 of the snow sweeping device to the main control module 110; the main control module 110 determines whether accumulated ice on the operation module 130 needs to be cleaned according to the status information; if the accumulated ice on the operation module 130 needs to be cleaned, the main control module 110 sends a control instruction to the operation module 130; and the operation module 130 cleans the accumulated ice on the operation module 130 according to the control instruction. Thus, it can be seen that in this solution, the main control module 110 may first receive the status information of the operation module 130, and determine whether the operation module 130 needs to clean accumulated ice based on the status information, and a control instruction for cleaning accumulated ice is sent to the operation module 130 if the accumulated ice needs to be cleaned. The operation module 130 cleans accumulated ice according to the control instruction. In this way, the working efficiency of the snow sweeping device can be ensured, stalling of a snow sweeping motor is avoided, and the probability of damage of the snow sweeping device is reduced.

According to the cleaning method described in the embodiment of FIG. 6 above, a further detailed description will be given below by taking a snow sweeping device as an execution subject.

Referring to FIG. 8, FIG. 8 is a schematic flow diagram showing the steps of a cleaning method according to another embodiment of the present application, and the cleaning method is applied to a snow sweeping device. In an embodiment of the present application, a description will be made from the perspective of the snow sweeping device, and the snow sweeping device includes an operation module 130. When the snow sweeping device operates, a specific flow of the cleaning method is as follows: 0201, status information of the operation module is detected.

Detecting the status information of the operation module 130 can be implemented in various ways, and how the snow sweeping device detects the status information of the operation module 130 can be further explained in combination with Step 101. Illustratively, the snow sweeping device may detect the status information of the operation module 130 by using a sensor technology, such as a temperature sensor, a humidity sensor, a vibration sensor, and the like. These sensors can monitor the status information of the operation module 130 in real time and convert the status information into electrical signals for status information transfer.

By the above manner, the status information of the operation module 130 can be detected by the sensor, thereby monitoring the status information of the operation module 130 in real time, so as to determine whether accumulated ice on the operation module 130 needs to be cleaned, improving the cleaning efficiency of the snow sweeping device, and ensuring the normal operation of the snow sweeping device.

0202, It is determined whether accumulated ice on the operation module needs to be cleaned according to the status information.

After the snow sweeping device acquires the status information of the operation module 130, it can be determined whether accumulated ice on the operation module 130 needs to be cleaned according to the status information. The status information may include temperature information, humidity information, vibration information, current information, and the like. Exemplarily, when ice accumulation occurs, the temperature of the operation module 130 may be acquired through the temperature information, and when the temperature of the operation module 130 drops, it may be determined that there may be accumulated ice on the operation module 130. If the temperature of the operation module 130 measured by the temperature sensor is lower than a set threshold value, it may be determined that there is accumulated ice on the operation module 130. When the humidity surrounding the operation module 130 is high, it indicates that ice accumulation may occur on the operation module 130, because when the humidity is high, moisture in the air is more likely to condense into water droplets or ice crystals. Additionally, when there is accumulated ice on the operation module 130, since the accumulated ice increases the weight and the unbalance condition of the operation module 130, so that the operation module 130 may vibrate during the cleaning of the accumulated ice, the vibration degree of the operation module 130 can also be determined based on the vibration information of the operation module 130, thereby determining whether there is accumulated ice on the operation module 130 based on the vibration condition of the operation module 130.

In some embodiments, the status information at least includes current information and location information, and the snow sweeping device may determine whether accumulated ice on the operation module 130 needs to be cleaned according to an operating current value and an operating distance of the operation module 130. For example, Step 0202 that "it is determined whether the accumulated ice on the operation module 130 needs to be cleaned according to the status information" may include:
(0202.1) determining the operating current value of the operation module 130 according to the current information;
(0202.2) determining the operating distance of the operation module 130 according to the location information;
(0202.3) determining whether the operating current value is greater than a first threshold value, and/or whether the operating distance is greater than a second threshold value;
(0202.4) in a case where the operating current value is greater than the first threshold value, and/or the operating distance is greater than the second threshold value, determining that the accumulated ice on the operation module 130 needs to be cleaned.

When the operation module 130 of the snow sweeping device is in an operating status, the snow sweeping device can utilize a main control module 110 to determine whether the operation module 130 needs to clean the accumulated ice according to the current information and the location information. In the case where the operating current value is greater than the first threshold value, and/or the operating distance is greater than the second threshold value, it is determined that the accumulated ice on the operation module 130 needs to be cleaned. A specific implementation step may refer to Step 102.

By the above manner, through the current information and the location information, it can be determined whether the snow sweeping device needs to clean the accumulated ice on the operation module 130 in the snow sweeping device, thereby improving the working efficiency, safety and reliability of the snow sweeping device, reducing the maintenance cost, and prolonging the service life of the snow sweeping device.

0203, The accumulated ice on the operation module is cleaned in a case where the accumulated ice on the operation module needs to be cleaned.

The snow sweeping device may clean the accumulated ice on the operation module 130 in a case where it is determined that the accumulated ice on the operation module 130 needs to be cleaned. A specific implementation step may refer to those Step 0203.

In some embodiments, the operation module 130 includes a motor submodule and a blade submodule, and the snow sweeping device may control the motor submodule in the operation module 130 to perform reverse rotation, thereby achieving the effect of cleaning the accumulated ice. For example, Step 0203 that "the accumulated ice on the operation module 130 is cleaned" may include:
controlling the motor submodule to perform reverse rotation so that the blade submodule throws off accumulated ice on blades.

The snow sweeping device can control the motor submodule in the operation module 130 to perform reverse rotation, driving the blade submodule to rotate reversely, so as to throw off the accumulated ice on the blade submodule to achieve the effect of cleaning the accumulated ice. A specific implementation step may refer to Step 0203. In this way, by reversely rotating the motor submodule to drive the blade submodule to rotate reversely, the effect of throwing off the accumulated ice is achieved, ensuring the normal operation of the snow sweeping device.

By the above manner, the snow sweeping device can clean the accumulated ice on the operation module 130 in the case where the accumulated ice on the operation module 130 needs to be cleaned, protecting the safety of the snow sweeping device, and improving the working efficiency of the snow sweeping device.

In an embodiment of the present application, the cleaning method may further include Step B which may include:
(B.1) monitoring the time of the reverse rotation of the motor submodule; and
(B.2) controlling the motor submodule to stop the reverse rotation in a case where the time of the reverse rotation of the motor submodule is greater than a third threshold value.

The snow sweeping device can monitor the time of the reverse rotation of the motor submodule in real time, so that the motor submodule can be maintained in a reverse rotation state within a certain period of time, so as to achieve the effect of blade cleaning. The motor submodule is controlled to stop the reverse rotation, and the snow sweeping operation is continued to be performed in the case where the time of the reverse rotation of the motor submodule is greater than the third threshold value. A specific implementation step may refer to Step A. Hereby, the working efficiency of the snow sweeping device is ensured.

By the above manner, the operation of the motor submodule can be controlled by monitoring the time of the reverse rotation of the motor submodule, ensuring the normal operation of the snow sweeping device.

As can be seen from the above, in this solution, the status information of the operation module 130 may be first detected; it is determined whether the accumulated ice on the operation module 130 needs to be cleaned according to the status information; and the accumulated ice on the operation module 130 is cleaned in the case where the accumulated ice on the operation module 130 needs to be cleaned. Thus, it can be seen that the snow sweeping device can detect the status information of the operation module 130, and by detecting the status information of the operation module 130, it is determines whether the operation module 130 needs to clean the accumulated ice, so that the operation module 130 in the snow sweeping device is subjected to accumulated ice cleaning in the case where the accumulated ice needs to be cleaned, improving the working efficiency of the snow sweeping device.

In some embodiments, the snow sweeping device may be configured with multiple cleaning methods. For example, the snow sweeping device may be configured with the cleaning method in the embodiment of FIG. 3 (or FIG. 4 or FIG. 5) and the cleaning method in the embodiment of FIG. 8. Step 0201 and Step 201 (or Step 401) may be performed sequentially or simultaneously. For example, Step 0201 may be performed prior to Step 201 (or Step 401). For another example, Step 201 (or Step 401) may be performed prior to Step 0201. For another example, Step 0201 and Step 201 (or Step 401) may be performed simultaneously.

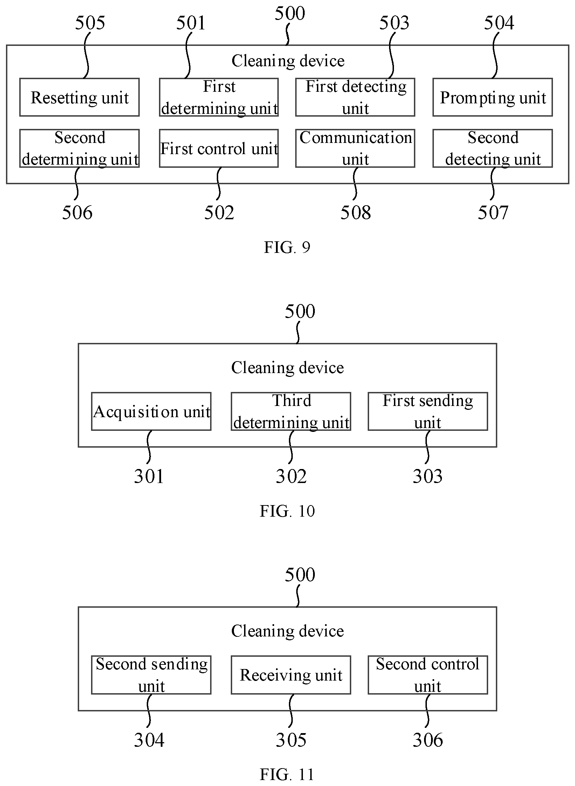

Referring to FIG. 9, FIG. 9 is a schematic structural diagram of a cleaning device 500 according to an embodiment of the present application. The cleaning device 500 is applied to the snow sweeping device in any one of the above embodiments, and the snow sweeping device can be a device for sweeping snow, such as a snow sweeping robot, a snow sweeping truck, a snow sweeping brush or the like.

As shown in FIG. 9, the cleaning device 500 can include a first determining unit 501, configured to determine a standby time of the snow sweeping device in a case where a standby status of the snow sweeping device is detected to obtain a first standby time; and a first control unit 502, configured to control a preset module of the snow sweeping device to perform ice cube cleaning in a case where the first standby time is not less than a time threshold.

In some embodiments, the cleaning device 500 further includes a first detecting unit 503, configured to detect a motion status of the preset module of the snow sweeping device; and a prompting unit 504, configured to output prompt information configured to prompt a user to clean ice cubes of the snow sweeping device according to the motion status.

In some embodiments, the prompting unit 504 is configured to output prompt information configured to prompt the user that the snow sweeping device is performing ice cube cleaning in a case where the motion status is a first status; and the prompting unit 504 is further configured to output prompt information configured to prompt the user that the snow sweeping device cannot perform ice cube cleaning in a case where the motion status is a second status.

In some embodiments, the first determining unit 501 is configured to start a timing device when it is detected that the snow sweeping device enters the standby status; and the first determining unit 501 is further configured to determine the standby time of the snow sweeping device according to the timing device to obtain the first standby time.

In some embodiments, the cleaning device 500 further includes a resetting unit 505, configured to reset the timing device; a second determining unit 506, configured to record the standby time of the snow sweeping device by the reset timing device to obtain a second standby time when the preset module of the snow sweeping device is controlled to to complete ice cube cleaning; and a first control unit 502, configured to control the preset module of the snow sweeping device to perform ice cube cleaning again in a case where the second standby time is not less than the time threshold.

In some embodiments, the first control unit 502 is configured to control a sweeping module to rotate and/or pitch; and/or the first control unit 502 is configured to control a moving module to extend and retract.

In some embodiments, the cleaning device 500 may further include a second detecting unit 507, configured to detect an icing situation in the preset module of the snow sweeping device. The first control unit 502 is further configured to control the preset module to perform ice cube cleaning according to the icing situation.

In some embodiments, the cleaning device 500 can further include a communication unit 508 and the first control unit 502. The communication unit 508 is configured to send device information of the snow sweeping device to a terminal, the device information including a standby status, a standby time, a motion status of the preset module and whether to perform a cleaning action; the communication unit 508 is further configured to receive a control instruction from the terminal; and the first control unit 502 is further configured to control the snow sweeping device according to the control instruction.

Referring to FIG. 10, another embodiment of the present application further provides a cleaning device 500 applied to a main control module 110 in a snow sweeping device, and the cleaning device 500 can be integrated in the main control module 110.

For example, as shown in FIG. 10, the cleaning device 500 may include an acquisition unit 301, a third determining unit 302, and a first sending unit 303. The acquisition unit 301 is configured to receive status information from an operation module 130 of the snow sweeping device; the third determining unit 302 is configured to determine whether accumulated ice on the operation module 130 needs to be cleaned according to the status information; and the first sending unit 303 is configured to send a control instruction to the operation module 130 if the accumulated ice on the operation module 130 needs to be cleaned, the control instruction being configured for the operation module 130 to perform accumulated ice cleaning.

In some embodiments, the status information at least includes current information and location information. The third determining unit 302 is further configured to determine an operating current value of the operation module 130 according to the current information; further configured to determine an operating distance of the operation module 130 according to the location information; further configured to determine whether the operating current value is greater than a first threshold value, and/or whether the operating distance is greater than a second threshold value; and further configured to determine that the accumulated ice on the operation module 130 needs to be cleaned in a case where the operating current value is greater than the first threshold value, and/or the operating distance is greater than the second threshold value.

As can be seen from the above, in the embodiments of the present application, the operation module 130 may send status information of the operation module 130 of the snow sweeping device to the main control module 110; the main control module 110 determines whether accumulated ice on the operation module 130 needs to be cleaned according to the status information; if the accumulated ice on the operation module 130 needs to be cleaned, the main control module 110 sends a control instruction to the operation module 130; and the operation module 130 cleans the accumulated ice on the operation module 130 according to the control instruction. Thus, it can be seen that in this solution, the main control module 110 may first receive the status information of the operation module 130, and determine whether the operation module 130 needs to clean the accumulated ice based on the status information, and send the control instruction for cleaning the accumulated ice to the operation module 130 if the accumulated ice needs to be cleaned. The operation module 130 cleans the accumulated ice according to the control instruction. In this way, the working efficiency of the snow sweeping device can be ensured, stalling of a snow sweeping motor is avoided, and the probability of damage of the snow sweeping device is reduced.

Referring to FIG. 11, another embodiment of the present application further provides a cleaning device 500 applied to an operation module 130 in a snow sweeping device, and the cleaning device 500 may be integrated in the operation module 130.

As shown in FIG. 11, the cleaning device 500 may include a second sending unit 304, a receiving unit 305, and a second control unit 306. The second sending unit 304 is configured to send status information of the operation module 130 to a main control module 110 of the snow sweeping device, the status information being configured for the main control module 110 to determine whether accumulated ice on the operation module 130 needs to be cleaned; the receiving unit 305 is configured to receive a control instruction from the main control module 110, the control instruction being a control instruction sent by the main control module 110 in a case where it is determined that the accumulated ice on the operation module 130 needs to be cleaned; and the second control unit 306 is configured to clean the accumulated ice on the operation module 130 according to the control instruction.

In some embodiments, the operation module 130 includes a motor submodule and a blade submodule. The second control unit 306 is specifically configured to control the motor submodule to perform reverse rotation according to the control instruction, so that the blade submodule throws off accumulated ice on blades.

In some embodiments, the second control unit 306 is also configured to monitor the time of the reverse rotation of the motor submodule; and also configured to control the motor submodule to stop the reverse rotation in a case where the time of the reverse rotation of the motor submodule is greater than a third threshold value.

As can be seen from the above, in the embodiments of the present application, the status information of the operation module 130 may be sent to the main control module 110 of the snow sweeping device; the control instruction from the main control module 110 is received; and the accumulated ice on the operation module 130 is cleaned according to the control instruction. Thus, it can be seen that in this solution, the status information may be sent to the main control module 110, and the accumulated ice on the operation module 130 is cleaned according to the control instruction from the main control module 110. Hereby, the accumulated ice on the operation module 130 can be cleaned, a snow sweeping motor is prevented from malfunctioning, and the working efficiency of the snow sweeping device is ensured.

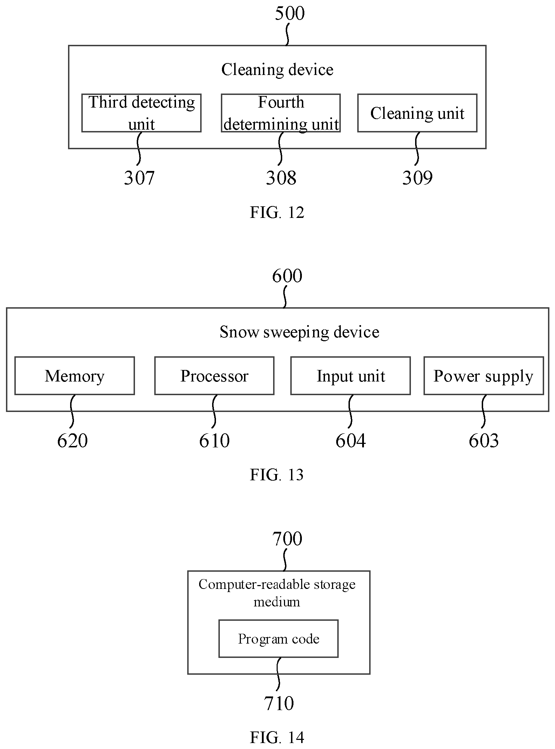

Referring to FIG. 12, another embodiment of the present application further provides a cleaning device 500 applied to a snow sweeping device, the snow sweeping device includes an operation module 130, and the cleaning device 500 can be integrated in the snow sweeping device.

For example, as shown in FIG. 12, the cleaning device 500 may include a third detecting unit 307, a fourth determining unit 308, and a cleaning unit 309.

The third detecting unit 307 is configured to detect the status information of the operation module 130; the fourth determining unit 308 is configured to determine whether accumulated ice on the operation module 130 needs to be cleaned according to the status information; and the cleaning unit 309 is configured to clean the accumulated ice on the operation module 130 if the accumulated ice on the operation module 130 needs to be cleaned.

In some embodiments, the status information at least includes current information and location information. The fourth determining unit 308 is further configured to determine an operating current value of the operation module 130 according to the current information; further configured to determine an operating distance of the operation module 130 according to the location information; further configured to determine whether the operating current value is greater than a first threshold value, and/or whether the operating distance is greater than a second threshold value; and further configured to determine that the accumulated ice on the operation module 130 needs to be cleaned in a case where the operating current value is greater than the first threshold value, and/or the operating distance is greater than the second threshold value.

In some embodiments, the operation module 130 includes a motor submodule and a blade submodule, and the cleaning unit 309 is specifically configured to control the motor submodule to perform reverse rotation so that the blade submodule throws off accumulated ice on blades.

In some embodiments, the third detecting unit 307 is further configured to monitor the time of the reverse rotation of the motor submodule; and the cleaning unit 309 is further configured to control the motor submodule to stop the reverse rotation in a case where the time of the reverse rotation of the motor submodule is greater than a third threshold value.

As can be seen from the above, in the embodiments of the present application, the status information of the operation module 130 may be first detected; it is determined whether the accumulated ice on the operation module 130 needs to be cleaned according to the status information; and the accumulated ice on the operation module 130 is cleaned in the case where the accumulated ice on the operation module 130 needs to be cleaned. Thus, it can be seen that the snow sweeping device can detect the status information of the operation module 130, and by detecting the status information of the operation module 130, it is determined whether the operation module 130 needs to clean the accumulated ice, so that the operation module 130 in the snow sweeping device is subjected to accumulated ice cleaning in the case where the accumulated ice needs to be cleaned, improving the working efficiency of the snow sweeping device.

The specific implementations of the above operations can refer to those in the previous embodiments, which will not be described in detail here.

It can be clearly understood by those skilled in the art that for convenience and conciseness of description, the specific operating processes of the devices and the units can refer to the corresponding processes in the foregoing method embodiments, which will not be described in detail here.

In several embodiments provided in the present application, the units may be coupled to each other electrically, mechanically or in other forms.

In addition, the functional units in the embodiments of the present application may be integrated in one processing unit, each unit may be physically present individually, or two or more units may be integrated in one unit. The integrated unit may be implemented in the form of hardware or in the form of a software functional unit.

As shown in FIG. 13, an embodiment of the present application further provides a schematic structural diagram of a snow sweeping device 600. The snow sweeping device 600 includes a processor 610 and a memory 620. The memory 620 stores computer program instructions, and when the computer program instructions are called by the processor 610, any one of the steps of the cleaning methods in the above embodiments can be performed. It will be appreciated by those skilled in the art that the structure of the snow sweeping device shown in the figure does not constitute a limitation of the snow sweeping device, and may include more or fewer components than those shown in the figure, or may combine some components, or have different component arrangements.

In some embodiments, the cleaning method implemented by the processor 610 invoking the computer program instructions includes: in a case where a standby status of the snow sweeping device is detected, determining a standby time of the snow sweeping device to obtain a first standby time; and controlling a preset module of the snow sweeping device to perform ice cube cleaning in a case where the first standby time is not less than a time threshold.

In some embodiments, the cleaning method implemented by the processor 610 invoking the computer program instructions include: receiving status information from an operation module of the snow sweeping device; determining whether accumulated ice on the operation module needs to be cleaned according to the status information; and if the accumulated ice on the operation module needs to be cleaned, sending a control instruction to the operation module, the control instruction being configured for the operation module to perform accumulated ice cleaning.

In some embodiments, the cleaning method implemented by the processor 610 invoking the computer program instructions includes: sending status information of the operation module to a main control module of the snow sweeping device, the status information being configured for the main control module to determine whether accumulated ice on the operation module needs to be cleaned; receiving a control instruction from the main control module, the control instruction being a control instruction sent by the main control module in a case where it is determined that the accumulated ice on the operation module needs to be cleaned; and cleaning the accumulated ice on the operation module according to the control instruction.

In some embodiments, the cleaning method implemented by the processor 610 invoking the computer program instructions includes: detecting status information of the operation module; determining whether accumulated ice on the operation module needs to be cleaned according to the status information; and cleaning the accumulated ice on the operation module in a case where the accumulated ice on the operation module needs to be cleaned.

The processor 610 may include one or more processing cores. The processor 610 connects various parts within the entire snow sweeping device using various interfaces and lines, and by running or executing instructions, a program, a code set or an instruction set stored in the memory 620, invoking data stored in the memory 620, performing various functions of the snow sweeping device and processing data, overall monitoring of the snow sweeping device is performed. Optionally, the processor 610 may be implemented in the form of at least one hardware of Digital Signal Processing (DSP), a Field-Programmable Gate Array (FPGA), and a Programmable Logic Array (PLA). The processor 610 may integrate one or a combination of more of a Central Processing Unit (CPU), a Graphics Processing Unit (GPU), a modem, and the like. The CPU mainly processes an operating system, a user interface, and an application program, etc.; the GPU is configured to be responsible for rendering and drawing of the display content; and the modem is configured to handle wireless communications. It will be appreciated that the modem may be implemented by a single communication chip without being integrated in the processor 610.

The memory 620 may include a Random Access Memory 620 (RAM) and may also include a Read-Only Memory 620. The memory 620 can be configured to store instructions, a program, codes, a code set, or an instruction set. The memory 620 may include a program storage area and a data storage area. The program storage area may store instructions for implementing an operating system, instructions for implementing at least one function (such as a touch control function, a sound playing function, an image playing function, etc.), instructions for implementing various method embodiments described above, and the like. The data storage area may also store data (such as phonebooks, audio and video data, and chatting record data) created by the snow sweeping device during use and the like.

The snow sweeping device further includes a power supply 603 for supplying power to each component, and the power supply 603 can be logically connected to the processor 610 through a power management system, so that functions such as charging, discharging, and power consumption management are implemented through the power management system. The power supply 603 may also include any components such as one or more of a DC or AC power source, a recharging system, a power failure detection circuit, a power converter or inverter, a power status indicator, and the like.

The snow sweeping device may also include an input unit 604 that may be configured to receive input digital or character information and generate keyboard, mouse, joystick, optical, or trackball signal inputs related to user settings and function controls.

Although not shown, the snow sweeping device 600 may further include a display unit and the like, which will not be repeated here. Specifically, in this embodiment, the processor 610 in the snow sweeping device loads executable files corresponding to processes of one or more application programs into the memory 620 according to the following instructions, and the processor 610 runs the application programs stored in the memory 620, thereby implementing various method steps provided in the foregoing embodiments.

As shown in FIG. 14, an embodiment of the present application further provides a computer-readable storage medium 700, having stored therein computer program instructions 710 that can be called by a processor to perform the cleaning method described in any one of the above embodiments.

In some embodiments, the cleaning method performed by the processor calling the computer program instructions 710 includes: in a case where a standby status of a snow sweeping device is detected, determining a standby time of the snow sweeping device to obtain a first standby time; and controlling a preset module of the snow sweeping device to perform ice cube cleaning in a case where the first standby time is not less than a time threshold.

In some embodiments, the cleaning method performed by the processor calling the computer program instructions 710 includes: receiving status information from an operation module of the snow sweeping device; determining whether accumulated ice on the operation module needs to be cleaned according to the status information; and if the accumulated ice on the operation module needs to be cleaned, sending a control instruction to the operation module, the control instruction being configured for the operation module to perform accumulated ice cleaning.

In some embodiments, the cleaning method performed by the processor calling the computer program instructions 710 includes: sending status information of the operation module to a main control module of the snow sweeping device, the status information being configured for the main control module to determine whether accumulated ice on the operation module needs to be cleaned; receiving a control instruction from the main control module, the control instruction being a control instruction sent by the main control module in a case where it is determined that accumulated ice on the operation module needs to be cleaned; and cleaning the accumulated ice on the operation module according to the control instruction.

In some embodiments, the cleaning method performed by the processor calling the computer program instructions 710 includes: detecting status information of the operation module; determining whether accumulated ice on the operation module needs to be cleaned according to the status information; and cleaning the accumulated ice on the operation module in a case where the accumulated ice on the operation module needs to be cleaned.

The computer-readable storage medium may be an electronic memory such as a flash memory, an EEPROM (Electrically Erasable Programmable Read Only Memory), an EPROM, a hard disk or a ROM. Optionally, the computer-readable storage medium includes a non-transitory and/or non-volatile Computer-Readable Storage Medium. The computer-readable storage medium 700 has a storage space for program codes to execute any method steps in the above methods. These program codes can be read from or written into one or more computer program products. The program code may be compressed, for example, in a suitable form.

According to an aspect of the present application, there is provided a computer program product, or a computer program, including computer instructions stored in a computer-readable storage medium. The processor of the snow sweeping device reads the computer instructions from the computer-readable storage medium, and the processor executes the computer instructions, so that the snow sweeping device performs the methods provided in various optional implementations provided by the above embodiments.

The above are only preferred embodiments of the present application, and are not intended to limit the present application in any form. Although the present application has been described above with reference to preferred embodiments, they are not intended to limit the present application. Any person skilled in the art, without departing from the scope of the technical solutions of the present application, may make some changes or modifications to the equivalent embodiments using the technical contents disclosed above. Any simple amendments, equivalent changes and modifications made to the above embodiments according to the technical essence of the present application without departing from the content of the technical solutions of the present application shall still fall within the scope of the technical solutions of the present application.

## Claims

1. A cleaning method applied to a snow sweeping device, comprising:
in a case where a standby status of the snow sweeping device is detected, determining a standby time of the snow sweeping device to obtain a first standby time; and
controlling a preset module of the snow sweeping device to perform ice cube cleaning in a case where the first standby time is not less than a time threshold.

2. The method according to claim 1, further comprising:
detecting a motion status of the preset module of the snow sweeping device; and
outputting prompt information configured to prompt a user to clean ice cubes of the snow sweeping device according to the motion status.

3. The method according to claim 2, wherein outputting the prompt information configured to prompt the user to clean ice cubes of the snow sweeping device according to the motion status comprises:
in a case where the motion status is a first status, outputting prompt information configured to prompt the user that the snow sweeping device is performing ice cube cleaning; and
in a case where the motion status is a second status, outputting prompt information configured to prompt the user that the snow sweeping device cannot perform ice cube cleaning.

4. The method according to any one of claims 1 to 3, wherein the snow sweeping device comprises a timing device, and determining the standby time of the snow sweeping device in the case where the standby status of the snow sweeping device is detected to obtain the first standby time comprises:
starting the timing device when it is detected that the snow sweeping device enters the standby status; and
determining the standby time of the snow sweeping device according to the timing device to obtain the first standby time.

5. The method according to claim 4, further comprising:
resetting the timing device;
recording the standby time of the snow sweeping device by the reset timing device to obtain a second standby time when the preset module of the snow sweeping device is controlled to complete ice cube cleaning; and
controlling the preset module of the snow sweeping device to perform ice cube cleaning again in a case where the second standby time is not less than the time threshold.

6. The method according to any one of claims 1 to 5, wherein the preset module comprises a sweeping module and a moving module, and controlling the preset module of the snow sweeping device to perform ice cube cleaning comprises:
controlling the sweeping module to rotate and/or pitch; and/or
controlling the moving module to extend and retract.

7. The method according to any one of claims 1 to 6, further comprising:
detecting an icing situation in the preset module of the snow sweeping device, wherein
controlling the preset module of the snow sweeping device to perform ice cube cleaning comprises:
controlling the preset module to perform ice cube cleaning according to the icing situation.

8. The method according to any one of claims 1 to 7, further comprising:
sending device information of the snow sweeping device to a terminal, wherein the device information comprises a standby status, a standby time, a motion status of the preset module and whether to perform a cleaning action, and the terminal is connected with the snow sweeping device.

9. The method according to any one of claims 1 to 8, further comprising:
receiving a control instruction from the terminal; and
controlling the snow sweeping device according to the control instruction.

10. A cleaning method applied to a main control module in a snow sweeping device, comprising:
receiving status information from an operation module of the snow sweeping device;
determining whether accumulated ice on the operation module needs to be cleaned according to the status information; and
if the accumulated ice on the operation module needs to be cleaned, sending a control instruction to the operation module, the control instruction being configured for the operation module to perform accumulated ice cleaning.

11. The method according to claim 10, wherein the status information comprises at least current information and location information, and determining whether the accumulated ice on the operation module needs to be cleaned according to the status information comprises:
determining an operating current value of the operation module according to the current information;
determining an operating distance of the operation module according to the location information;
determining whether the operating current value is greater than a first threshold value, and/or whether the operating distance is greater than a second threshold value; and
determining that the accumulated ice on the operation module needs to be cleaned in a case where the operating current value is greater than the first threshold value, and/or the operating distance is greater than the second threshold value.

12. A cleaning method applied to an operation module in a snow sweeping device, comprising:
sending status information of the operation module to a main control module of the snow sweeping device, the status information being configured for the main control module to determine whether accumulated ice on the operation module needs to be cleaned;
receiving a control instruction from the main control module, the control instruction being a control instruction sent by the main control module in a case where it is determined that the accumulated ice on the operation module needs to be cleaned; and
cleaning the accumulated ice on the operation module according to the control instruction.

13. The method according to claim 12, wherein the operation module comprises a motor submodule and a blade submodule, and cleaning the accumulated ice on the operation module according to the control instruction comprises:
controlling the motor submodule to perform reverse rotation according to the control instruction, so that the blade submodule throws off accumulated ice on blades.

14. The method according to claim 13, further comprising:
monitoring the time of the reverse rotation of the motor submodule; and
controlling the motor submodule to stop the reverse rotation in a case where the time of the reverse rotation of the motor submodule is greater than a third threshold value.

15. A cleaning method applied to a snow sweeping device, the snow sweeping device comprising an operation module, the method comprising:
detecting status information of the operation module;
determining whether accumulated ice on the operation module needs to be cleaned according to the status information; and
cleaning the accumulated ice on the operation module in a case where the accumulated ice on the operation module needs to be cleaned.

16. The method according to claim 15, wherein the status information comprises at least current information and location information, and determining whether the accumulated ice on the operation module needs to be cleaned according to the status information comprises:
determining an operating current value of the operation module according to the current information;
determining an operating distance of the operation module according to the location information;
determining whether the operating current value is greater than a first threshold value, and/or whether the operating distance is greater than a second threshold value; and
determining that the accumulated ice on the operation module needs to be cleaned in a case where the operating current value is greater than the first threshold value, and/or the operating distance is greater than the second threshold value.

17. The method according to claim 15 or 16, wherein the operation module comprises a motor submodule and a blade submodule, and cleaning the accumulated ice on the operation module comprises:
controlling the motor submodule to perform reverse rotation, so that the blade submodule throws off accumulated ice on blades.

18. The method according to any one of claims 15 to 17, further comprising:
monitoring the time of the reverse rotation of the motor submodule; and
controlling the motor submodule to stop the reverse rotation in a case where the time of the reverse rotation of the motor submodule is greater than a third threshold value.

19. A cleaning device applied to a snow sweeping device, comprising:
a first determining unit, configured to determine a standby time of the snow sweeping device in a case where a standby status of the snow sweeping device is detected to obtain a first standby time; and
a first control unit, configured to control a preset module of the snow sweeping device to perform ice cube cleaning in a case where the first standby time is not less than a time threshold.

20. A cleaning device applied to a main control module in a snow sweeping device, comprising:
an acquisition unit, configured to receive status information from an operation module of the snow sweeping device;
a third determining unit, configured to determine whether accumulated ice on the operation module needs to be cleaned according to the status information; and
a first sending unit, configured to send a control instruction to the operation module if the accumulated ice on the operation module needs to be cleaned, the control instruction being configured for the operation module to perform accumulated ice cleaning.

21. A cleaning device applied to an operation module in a snow sweeping device, comprising:
a second sending unit, configured to send status information of the operation module to a main control module of the snow sweeping device, the status information being configured for the main control module to determine whether accumulated ice on the operation module needs to be cleaned;
a receiving unit, configured to receive a control instruction from the main control module, the control instruction being a control instruction sent by the main control module in a case where it is determined that the accumulated ice on the operation module needs to be cleaned; and
a second control unit, configured to clean the accumulated ice on the operation module according to the control instruction.

22. A cleaning device applied to a snow sweeping device, the snow sweeping device comprising an operation module, the cleaning device comprising:
a third detecting unit, configured to detect status information of the operation module;
a fourth determining unit, configured to determine whether accumulated ice on the operation module needs to be cleaned according to the status information; and
a cleaning unit, configured to clean the accumulated ice on the operation module if the accumulated ice on the operation module needs to be cleaned.

23. A snow sweeping device, comprising a processor and a memory, the memory storing a computer program, the processor invoking the computer program to implement the method according to any one of claims 1 to 18.

24. A computer-readable storage medium, having stored therein program codes that can be invoked by a processor to implement the method according to any one of claims 1 to 18.
